# EUROPEAN PATENT APPLICATION

(11) **EP 2 022 324 A2**
(43) Date of publication of application: **11.02.2009**
(21) Application number: 08161411.7
(22) Date of filing: 30.07.2008
(51) Int. Cl.: A01K 5/00

(54) **Liner for Vertical Mixer**

(30) Priority: 08.08.2007 US 835740; 13.02.2008 CA 2621587
(71) Applicant: Jay-Lor International Inc., Orton, Ontario L0N 1NO (CA)
(72) Inventor: Tamminga, Jakob R., Orton Ontario L0N 1N0 (CA)
(74) Representative: Andersson, Björn E.

(57) **Abstract**

A vertical mixer assembly (20; 420; 520) for mixing a bulk material, comprises a floor (22; 422; 522) having an upper surface. At least one wall (26; 426; 526) extends from the floor (22; 422; 522) and has an interior surface and an upper edge (28; 28; 528). The floor (22; 422; 522) and the at least one wall (26; 426; 526) defines an open topped mixing chamber (32; 432; 532) having a general tub-shape suitable for receiving the bulk material, and the mixing chamber (32; 432; 532) comprises an outlet for egress of mixed bulk material.

At least one vertical auger (36; 436; 536) is positioned in the mixing chamber (32; 432; 532) for mixing the bulk material, and at least one auger (36; 436; 536) has an exterior surface suitable for mixing the bulk material upon operation of the at least one auger (36; 436; 536).

A polymer based wear-resistant material (40; 440; 540) coats or covers at least a portion of the mixing chamber (32; 432; 532), wherein a thickness of the polymer based wear-resistant material (40; 440; 540) is more than 600 µm.

## Description

### TECHNICAL FIELD

This invention is related to vertical mixer assemblies and in particular to liners for vertical mixer assemblies.

### BACKGROUND

Feed for livestock typically includes different ingredients which are required to be mixed together before they are provided to the livestock. For example, hay may be mixed with a variety of feed supplements, such as vitamins, to provide a bulk feed material. Various mixers are known which are designed to mix the bulk feed material to a desired extent. Vertical feed mixers are disclosed, for instance, in U.S. Patent No. 5,863,122 (Tamminga) and in U.S. Patent No. 5,462,354 (Neier).

Many prior art feed mixers include a container including one or more walls and a floor defining a mixing chamber, with a mixing means, typically one or more augers, vertically positioned in a mixing chamber. In conventional use, the components of the bulk feed material are mixed together by rotation of the auger. After mixing, the bulk feed material is removed from the container and dispensed as appropriate.

The amounts of feed material to be mixed are usually relatively large. For example, a load of bulk feed material in a mixer can weigh about 10,000 lbs. or more.

Various problems have arisen in connection with prior art vertical mixers. Although the majority of prior art containers are made of steel or stainless steel, one problem associated with vertical mixers of the prior art is wear. Observed wear is usually through abrasion caused by the rotation of the auger and rubbing of the contents of the mixer against the walls, floor and auger of the mixer. Because of the large volumes and the relatively fast rotation of the auger, the walls and floor tend to wear out relatively quickly.

In prior art mixers, steel and stainless steel liners are sometimes positioned in the prior art containers in an attempt to address the problem of wear. However, feed materials coming out of the field often have sand or other abrasives in them. As a result, the steel liners tend to wear quickly, in many cases as quickly as the steel walls and floor in an unlined container. The wear may be exacerbated by the acidic character of most feed material.

Stainless steel liners have somewhat better wearability. However, both the steel and the stainless steel liners of the prior art have to be welded to the inside of the container, and this is a relatively expensive and time-consuming process. Furthermore, installation of the prior art metallic liner reduces the inside diameter of the container, requiring modifications to the mixing means where the feed mixer had not previously included a liner.

Another disadvantage is that repair of prior art steel and stainless steel liners once worn is not feasible. Therefore, prior art steel and stainless steel liners need to be replaced when they wear out. Replacement requires removing the old liner and welding a new liner in place, which cannot be done without the appropriate equipment and expertise. Further, because of the heat generated during welding, the exterior of the mixer requires repainting each time a metallic liner is installed.

Also, because livestock typically need to be fed in the morning and also in the afternoon, a farmer/user usually can allow the vertical feed mixer to be down for only a relatively short time period on a given day.

Further, where the surfaces defining the mixing chamber are steel or stainless steel, relatively high torque must be applied to the mixing means in order to mix the bulk feed material. This is especially so if unmixed feed material is dumped into the container when the mixer is not operating, and the mixing means is then required to overcome the inertia of a load of unmixed feed material. This problem is exacerbated when the ambient temperature is low, for example below 0 °C, as feed or other mix tends to stick to the steel or stainless steel of the mixing chamber. Because of this, the prior art vertical feed mixers are generally required to have a relatively heavy construction, so that the mixing means and the container can withstand the relatively high torque applied and have reasonable longevity.

As another consequence of the relatively high stress resulting from movement of the feed material in the prior art mixers, the mixing means also tend to wear out relatively rapidly. In practice, it is often economic to replace the entire vertical feed mixer, rather than replacing only the mixing means and the mixing chamber. Ultimately, longevity of vertical mixers (and their resale value), are adversely affected by the insufficient wearability of known containers and the disadvantages of the known steel and stainless steel liners.

The prior art vertical mixers have various other disadvantages. For example, because of the requirement for relatively high torque, operation of the prior art vertical feed mixers involves relatively high energy consumption (i.e., larger horsepower requirements, resulting in more pollution via more emissions and increased use of fuel for powering the mixers). Also, noise levels during operation of the known vertical mixers are excessive, due to the relatively large forces required to be applied by the mixing means.

There is therefore a need for an improved vertical mixer which addresses or mitigates one or more of the defects of the prior art.

### SUMMARY

The invention provides a vertical mixer for mixing bulk material having a mixing chamber suitable for receiving the bulk material, mixing the bulk material therein and expelling mixed bulk material. One or more vertical augers are positioned in the mixing chamber for mixing bulk material placed in the mixing chamber. At least a portion of either an inner surface of the mixing chamber or an exterior surface of the auger has a polymer based wear-resistant coating or a cover suitable for increasing the operational lifespan of the surface over which it is coated or covered. The polymer based wear-resistant coating may be a polymer or composite material. The polymer based wear-resistant material may be more slippery, harder and/or have a lower coefficient of friction than equivalent steel or stainless steel liners or mixing chambers thereby reducing the amount of energy required to mix the bulk material. The polymer based wear-resistant coating or covering may be applied in the form of a spray-on or roll-on coating which is cured following application. Alternatively, polymer based wear-resistant cover segments may be fastened to inner surfaces of the mixing chamber or an exterior surface of the auger. Alternatively, the polymer based wear-resistant coating or cover may be a substantially non-metallic wear-resistant coating or cover.

One illustrative embodiment provides for a vertical mixer assembly for mixing a bulk material comprising:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material;
at least one vertical auger positioned in the mixing chamber for mixing the bulk material, the auger having an exterior surface suitable for mixing the bulk material upon operation of the auger; and
a polymer based wear-resistant material coating or covering at least a portion of the mixing chamber.

Another illustrative embodiment provides for a method of increasing wear-resistance in a vertical mixer for mixing bulk material comprising:
providing a vertical mixer having a mixing chamber for receiving bulk material and at least one vertical auger in the mixer chamber having an exterior surface suitable for mixing the bulk material; and
fastening a polymer based wear-resistant covering to at least a portion of an inner surface of the mixing chamber or an exterior surface of the vertical auger.

Another illustrative embodiment provides for a method of increasing wear-resistance in a vertical mixer for mixing bulk material comprising:
providing a vertical mixer having a mixing chamber for receiving bulk material and at least one vertical auger in the mixer chamber having an exterior surface suitable for mixing the bulk material;
spraying a polymer based wear-resistant coating on at least a portion of an inner surface of the mixing chamber or the exterior surface of the at least one vertical auger; and
curing the sprayed-on polymer based wear-resistant coating to form a cured non-metallic wear-resistant coating on at least a portion of the inner surface of the mixing chamber or the exterior surface of the at least one auger.

Another illustrative embodiment provides for a method of increasing wear-resistance in a vertical mixer for mixing bulk material comprising:
providing a vertical mixer having a mixing chamber for receiving bulk material and at least one vertical auger in the mixer chamber having an exterior surface suitable for mixing the bulk material;
applying a polymer based wear-resistant liquid or semi-liquid coating on at least a portion of an inner surface of the mixing chamber or the exterior surface of the at least one vertical auger; and
curing the rolled-on polymer based wear-resistant coating to form a cured polymer based wear-resistant coating on at least a portion of the inner surface of the mixing chamber or the exterior surface of the at least one vertical auger.

Another illustrative embodiment provides for a vertical mixer assembly for mixing a bulk material, comprising:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material; and
at least one vertical auger positioned in the mixing chamber for mixing the bulk material, the auger having an exterior surface suitable for mixing the bulk material upon operation of the auger;
each of the floor and the at least one wall being formed from a substantially non-metallic wear-resistant segments.

Another illustrative embodiment provides for a vertical mixer assembly for mixing a bulk material, comprising:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material;
at least one vertical auger positioned in the mixing chamber for mixing the bulk material, the auger having an exterior surface suitable for mixing the bulk material upon operation of the auger; and
a polymer based wear-resistant cover extending above the upper edge of the at least one wall.

A vertical mixer assembly for mixing a bulk material, comprising:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material;
at least one vertical auger positioned in the mixing chamber for mixing the bulk material, the auger having an exterior surface suitable for mixing the bulk material upon operation of the auger; and
a polymer based wear-resistant material coating or covering at least a portion of the mixing chamber.

The coating or covering may a minimum thickness selected from the group consisting of: at least about 600 µm and at least about 1000 µm.

The polymer based wear-resistant material may coat or cover at least a portion of the interior surface of the at least one wall substantially from the floor to a level lower than the top edge.

The polymer based wear-resistant material may coat or cover at least a portion of a surface selected from the group consisting of: a surface on the interior of the mixing chamber, the upper surface, the interior surface and the exterior surface.

The polymer based wear-resistant material may comprise a metallic component.

The polymer based wear-resistant material may comprise one or more polymers selected from the group consisting of: polyethylene (PE), high density polyethylene (HDPE), polyurethane, polyurea, polymethyl methacrylate (PMMA), polyamides, nylon polymers, epoxy polymers and polytetrafluoroethylene (PTFE).

The polymer based wear-resistant material is a coating selected from the group consisting of: a liquid or semi-liquid spray-on polymer based material and a liquid or semi-liquid roll-on polymer based material.

The polymer based wear-resistant material may be a covering selected from the group consisting of: an extruded polymer, a moulding, a pre-fabricated polymer, a fabricated polymer.

The polymer based wear-resistant material may be a spray-on polymer based material.

The spray-on polymer based material may comprise polyurethane and optionally polyurea.

The polymer based wear-resistant material may be a covering fastened to the mixing chamber using a fastener.

The fastener may be selected from the group consisting of a bolt, a screw, weldable steel plugs or straps, a rivet and adhesive.

The polymer based wear-resistant material may be a covering and covers at least a portion of the interior surface adjacent the floor and is fastened to the wall at least near the floor to prevent mixed bulk material from being wedged between the covering and the interior surface.

A method of increasing wear-resistance in a vertical mixer for mixing bulk material comprises:
providing a vertical mixer having a mixing chamber for receiving bulk material and at least one vertical auger in the mixing chamber having an exterior surface suitable for mixing the bulk material; and
fastening a polymer based wear-resistant covering to at least a portion of an inner surface of the mixing chamber or an exterior surface of the vertical auger.

The polymer based wear resistant covering may be fastened to one or more of an interior surface of a wall of the mixing chamber, an upper surface of the floor of the mixing chamber and an exterior surface of the at least one auger.

The polymer based wear-resistant covering may be fastened to an inner surface of a wall of the mixing chamber substantially adjacent a floor of the mixing chamber and the method further comprises the step of:
fastening the polymer based wear-resistant covering near a bottom edge of the covering substantially adjacent the floor of the mixing chamber to prevent mixed bulk material from being wedged between the covering and the interior surface.

The polymer based wear-resistant covering may comprise one or more polymers selected from the group consisting of: polyethylene (PE), high density polyethylene (HDPE), polyurethane, polyurea, polymethyl methacrylate (PMMA), polyamides, nylon polymers and polytetrafluoroethylene (PTFE) and optionally a metallic component.

Another method of increasing wear-resistance in a vertical mixer for mixing bulk material comprises:
providing a vertical mixer having a mixing chamber for receiving bulk material and at least one vertical auger in the mixing chamber having an exterior surface suitable for mixing the bulk material;
spraying a polymer based wear-resistant coating on at least a portion of an inner surface of the mixing chamber or the exterior surface of the at least one vertical auger; and
curing the sprayed-on polymer based wear-resistant coating to form a cured non-metallic wear-resistant coating on at least a portion of the inner surface of the mixing chamber or the exterior surface of the at least one auger.

The polymer based wear-resistant coating may be a multiple part composition which begins curing upon mixing of the multiple parts.

The above method may also comprise the steps of:
taping of a floor of the mixing chamber substantially adjacent a welding bead between the floor and a wall of the mixing chamber before spraying of the polymer based wear-resistant coating onto an interior surface of the wall of the mixing chamber; and
removing the tape from the floor before curing of the polymer based wear-resistant coating thereby providing a substantially smooth or a substantially seamless join between the sprayed-on polymer based wear-resistant coating and the welding bead.

The polymer based wear resistant coating may be sprayed onto one or more of an interior surface of a wall of the mixing chamber, an upper surface of the floor of the mixing chamber or the exterior surface of the at least one auger.

The non-metallic wear resistant coating may be sprayed onto an interior surface of a wall of the mixing chamber.

The non-metallic wear-resistant coating may comprise one or more polymers selected from the group consisting of: polyethylene (PE), high density polyethylene (HDPE), polyurethane, polyurea, polymethyl methacrylate (PMMA), polyamides, nylon polymers, epoxy polymers, and polytetrafluoroethylene (PTFE) and optionally a metallic component.

The polymer based wear-resistant coating may comprise polyurethane and optionally polyurea.

A method of increasing wear-resistance in a vertical mixer for mixing bulk material comprises:
providing a vertical mixer having a mixing chamber for receiving bulk material and at least one vertical auger in the mixer chamber having an exterior surface suitable for mixing the bulk material;
applying a polymer based wear-resistant liquid or semi-liquid coating on at least a portion of an inner surface of the mixing chamber or the exterior surface of the at least one vertical auger; and
curing the applied polymer based wear-resistant coating to form a cured polymer based wear-resistant coating on at least a portion of the inner surface of the mixing chamber or the exterior surface of the at least one vertical auger.

The polymer based wear-resistant coating may be rolled onto one or more of an interior surface of a wall of the mixing chamber, an upper surface of the floor of the mixing chamber and the exterior surface of the at least one auger.

The polymer based wear-resistant coating may comprise one or more polymers selected from the group consisting of: polyethylene (PE), high density polyethylene (HDPE), polyurethane, polyurea, polymethyl methacrylate (PMMA), polyamides, nylon polymers, epoxy polymers and polytetrafluoroethylene (PTFE) and optionally a metallic component.

The polymer based wear-resistant coating may comprise a polyurethane and optionally polyurea.

A vertical mixer assembly for mixing a bulk material, comprises:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material;
at least one vertical auger positioned in the mixing chamber for mixing the bulk material, the auger having an exterior surface suitable for mixing the bulk material upon operation of the auger; and
a substantially non-metallic wear-resistant material coating or covering at least a portion of the mixing chamber.

Another vertical mixer assembly for mixing a bulk material comprises:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material;
at least one vertical auger positioned in the mixing chamber for mixing the bulk material, the auger having an exterior surface suitable for mixing the bulk material upon operation of the auger; and
a polymer based wear-resistant cover extending above the upper edge of the at least one wall.

Still another vertical mixer assembly for mixing a bulk material comprises:
a floor having an upper surface;
at least one wall extending from the floor and having an interior surface and an upper edge;
the floor and the at least one wall defining an open topped mixing chamber having a general tub-shape suitable for receiving the bulk material;
the mixing chamber comprising an outlet for egress of mixed bulk material; and
at least one vertical auger positioned in the mixing chamber for mixing the bulk material, the auger having an exterior surface suitable for mixing the bulk material upon operation of the auger;
each of the floor and the at least one wall being formed from a substantially non-metallic wear-resistant segments.

### BRIEF DESCRIPTION OF THE DRAWINGS

Fig. 1 is an isometric view of an illustrative embodiment of a vertical mixer assembly;
Fig. 1a is a detail of a vertical mixer of Fig. 1 illustrating one embodiment of a spray-on polymer based coating;
Fig. 1b is a detail of a vertical mixer of Fig. 1 illustrating another embodiment of a spray-on or roll-on polymer based coating;
Fig. 1c is a detail of a vertical mixer of Fig. 1 illustrating one embodiment of a polymer based cover;
Fig. 2 is a cross-sectional view of the illustrative vertical mixer assembly of Fig. 1;
Fig. 2a is a detail of the cross-section view of Fig. 2, drawn at a larger scale;
Fig. 2b is another detail of the cross-section view of Fig. 2;
Fig. 2c is a cross-section of an illustrative alternative embodiment of a vertical mixer assembly, drawn at a smaller scale;
Fig. 2d is a detail of the cross-section view of Fig. 2c, drawn at a larger scale;
Fig. 3 is a cross-section of an alternative illustrative embodiment of a vertical mixer assembly, drawn at a smaller scale;
Fig. 4 is a cross-section of another alternative illustrative embodiment of a vertical mixer assembly, drawn at a smaller scale;
Fig. 4a is a detail of the cross-section view of Fig. 4, drawn at a larger scale;
Fig. 5 is a cross-section of another alternative illustrative embodiment of a vertical mixer assembly, drawn at a smaller scale; and
Fig. 5a is a detail of the cross-section view of Fig. 5, drawn at a larger scale.

### DETAILED DESCRIPTION

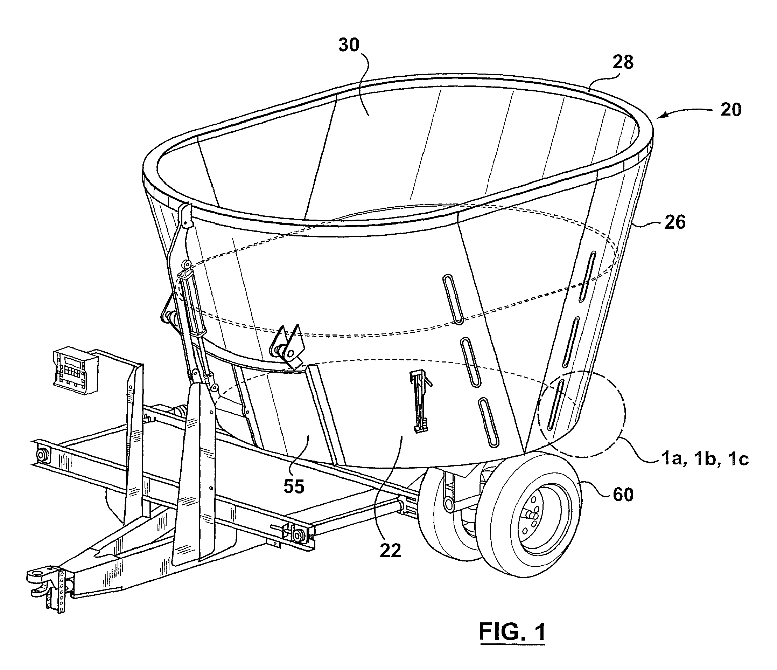

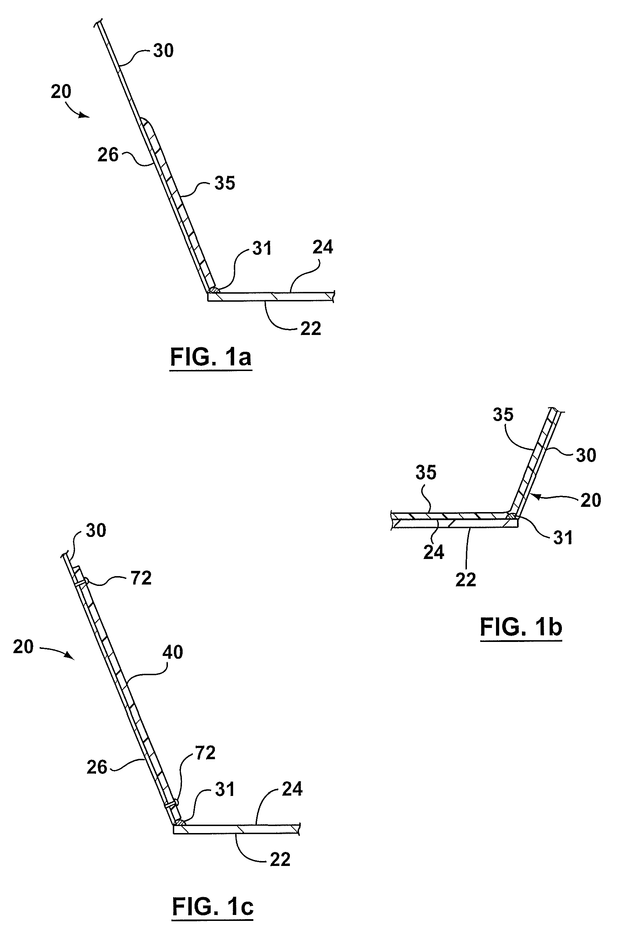

Figure 1 is an illustrative embodiment of a typical vertical mixer assembly shown generally at 20 to which a polymer based wear-resistant coating or covering may be applied or incorporated thereinto during manufacture.

The vertical mixer assembly 20 comprises a floor 22 and a wall 26 extending up from the floor 22 to form a tub or container for receiving bulk material. The area defined by the floor 22 and the wall 26 will be referred to as a mixing chamber and generally encompasses any structure suitable for receiving a bulk material for mixing and egress of the mixed bulk material. Egress of the mixed bulk material may be accomplished via a door 55. A vertical auger (not shown) is typically positioned in the mixing chamber for mixing deposited bulk material upon operation of the auger. The auger has an exterior surface which is configured for engagement with the bulk material and for mixing and/or cutting of the bulk material upon operation of the auger 36. The wall 26 has an upper edge 28 defining the opening in the top of the mixing chamber for receiving bulk material to be mixed and an interior surface 30 facing toward the inside of the tub.

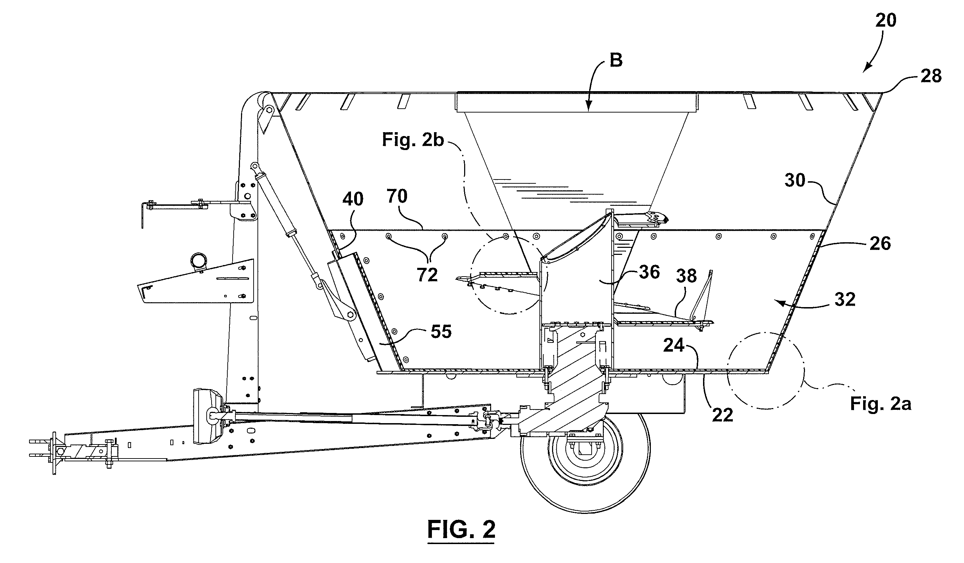

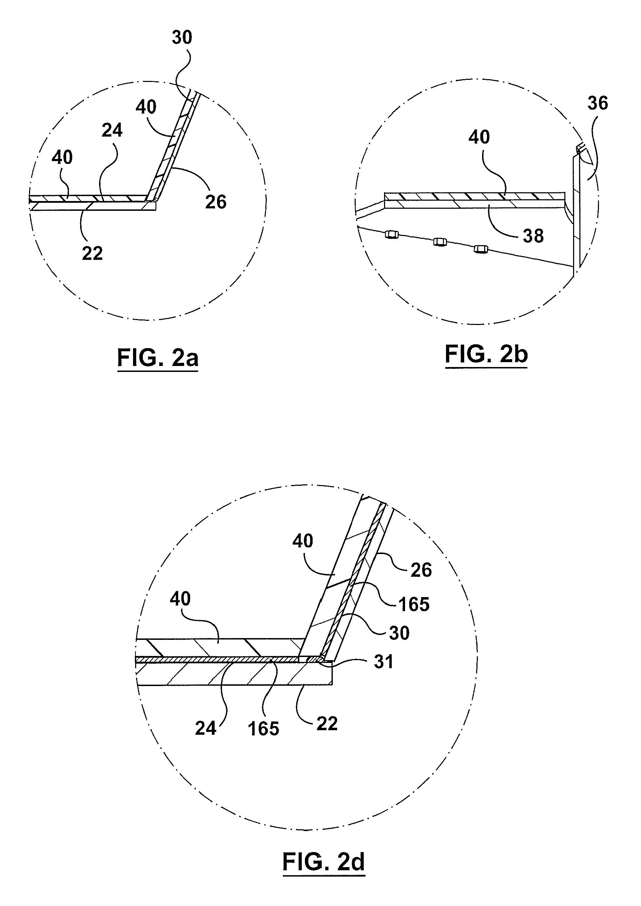

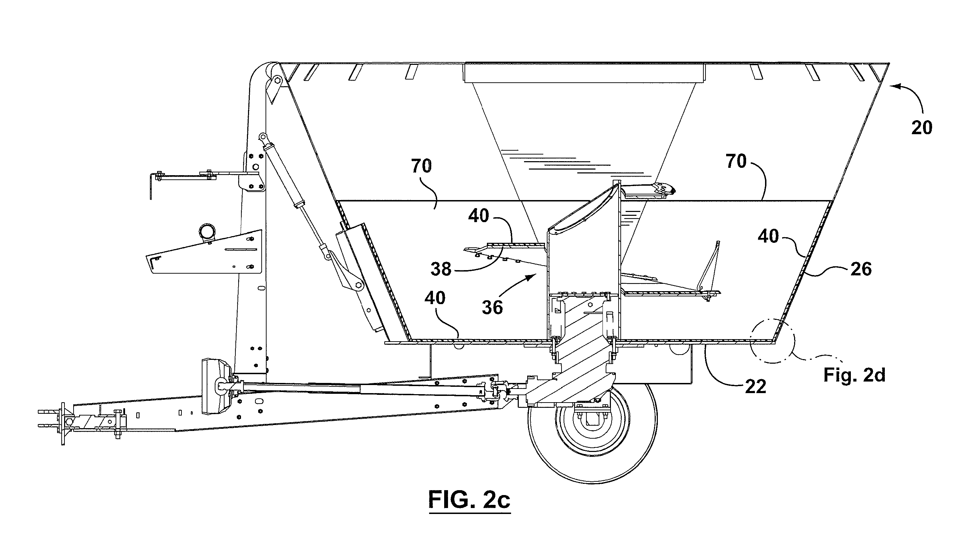

However, the specific setup of a vertical mixer 20 is not the crux of the present invention and any setup of a vertical mixer is suitable provided that the vertical mixer assembly has a mixing chamber including a floor and a wall component. As is known, the vertical mixer assembly 20 may include wheels 60 and be provided in the form of a trailer, as shown for example in Fig. 2. Alternatively, the assembly 20 may be mounted on a truck, or it may be designed to be stationary. Accordingly, it will be understood that a vertical mixer assembly 20 of the invention is not required to be provided in a trailer configuration.

The mixing chamber of the vertical mixer 20 may be made from steel and/or stainless steel. By coating or covering at least a portion of the interior surfaces of the mixing chamber or optionally an exterior surface of the auger with a polymer based wear-resistant cover, wear of the mixing chamber is greatly reduced and as such, maintenance and repair of the vertical mixer assembly 20 is minimized. Additional benefit may be gained if the polymer based wear-resistant cover or coating is slippery and/or has a low coefficient of friction for the bulk material thereby reducing the amount of torque required to operate the auger either from standstill after deposit of bulk material or during operation of the auger after mixing has begun. This may also be accomplished if the polymer based wear-resistant cover or coating is relatively hard.

Torque reduction has a number of benefits including a decrease in energy required and therefore an increase fuel economy, a decrease in noise generated as the operation of the auger requires less power from the driving engine, etc. This can result in a motor for powering the auger which requires less horsepower and therefore can be longer lasting. This also can result in a longer lasting machine and/or tractor.

The types of polymer based wear resistant coating or covering contemplated include polymers and composite materials. For example, the coating or covering may be any one of polyethylene (PE), high density polyethylene (HDPE), polyurethane, polyurea, polymethyl methacrylate (PMMA), polyamides, nylon urethanes and polytetrafluoroethylene (PTFE). Also included are epoxy type polymers which cure upon mixing with catalyzing agent or "hardener". For example, epichlorohydrin and bisphenol-A. Other suitable polymers and plastics may also be used provided that they are suitably wear-resistant and do not contaminate the bulk material in the vertical mixer. It should be understood that the polymer based wear-resistant compound may be slippery and/or hard and/or have a low coefficient of friction for the bulk material but does not necessarily have to posses each of these characteristics so long as wear is decreased. Furthermore, the polymer based wear-resistant material may optionally include a metallic compound for example, for enhancing anti-corrosion characteristics, pigment, etc. as one of skill in the art would be aware. The polymer based wear-resistant material may also include any suitable binders or fillers suitable for such an application.

In addition, various other composite materials, e.g., carbon fiber graphite composites, are suitable for engagement with the bulk material. It will be appreciated by those skilled in the art that various arrangements of one or more polymer based materials are usable in various combinations to provide the wear-resistant surface.

As will be discussed in more detail below, the polymer based coating or covering may be a spray-on coating, a roll-on coating and/or a fabricated segment(s) that is fastened to the mixing chamber and/or auger, or a one piece liner or a drum made completely out polymer based wear-resistant material and optionally reinforced by a steel webbing or frame, etc.

### Spray-on/Roll-on polymer based wear-resistant coating

Fig. 1a is a detailed view of one illustrative embodiment of a vertical mixer assembly 20 showing a wall 26 and a floor 22 of the vertical mixer 20. A welding bead 31 typically protrudes into the mixing chamber after connection of the wall 26 and the floor 22. The floor 22 has an upper surface 24 forming the bottom of the mixing chamber and the wall 26 has an inner surface 30 generally defining the edge of the mixing chamber. A polymer based wear-resistant coating 35 is shown coating a portion of the inner surface 30. Although the entire inner surface 30 may be covered by the coating 35 most wear is observed in the bottom 2/3 of the wall 26 and therefore covering of the bottom portion of the wall 26 may only be done. Coating 35 is a spray-on coating, for example a sprayable polyurethane based polymer optionally comprising polyurea. The coating 35 may also be a roll-on applied coating. The polymer based wear-resistant coating may be sprayed-on to a portion of the inner surface 30 and cured to provide for a hardened polymer based wear-resistant coating which increases the operation lifespan of the surface to which it has been applied. Although only the inner surface 30 is shown as having the coating 35 applied, the upper surface 24 and/or the exterior surface of the auger may also be fully or partially coated with the spray-on polymer based wear-resistant coating 35. Fig. 1b illustrates an embodiment wherein both the inner surface 30 and the upper surface 24 have been coated with spray-on polymer based wear-resistant coating 35. It will be appreciated that the embodiments described above with regard to spray-on coatings may alternatively be carried out using roll-on coatings.

The spray-on or roll-on coatings may use a polymer based wear-resistant coating which is either liquid or semi-liquid in application before curing.

A spray-on coating may be applied using a spray gun suitable for applying such polymers. It will be appreciated that a number of different styles and types of spray-guns may be used for applying a spray-on polymer based wear-resistant coating 35 to a portion of the mixing chamber and/or auger.

To further reduce wear, the coating 35 may overlap the welding bead 31 to provide for a substantially smooth or seamless join between the welding bead 31 and the coating 35. When a rough join or a gap between the coating 35 and the welding bead 31 exists, wear of the coating can be increased as the rough join or gap is rubbed by bulk material during mixing. One method of ensuring a smooth or seamless join is to tape off the upper surface 24 of the floor 22 adjacent the weld bead 31 before application of the spray-on polymer based wear-resistant coating 35. Following spray-on application of the coating 35 and before curing of the coating 35, the tape is removed, optionally in an upward direction substantially parallel to the wall 26. This results in a join between the coating 35 and the welding bead 31 that has a substantially smooth or seamless join. Other methods of proving for a substantially smooth or seamless join may also be used and are within the scope of the invention. The method of taping of the floor as described above may also be applied to roll-on application of a polymer based wear-resistant coating.

Repairing a worn or damaged portion of the polymer based wear-resistant coating 35 may be done by simply re-spraying the polymer based wear-resistant coating and curing until hardened. The portion to be repaired may benefit from preparing the surface for re-spraying to ensure proper adhesion of the new coating. Preparing may involve sanding, scuffing, cleaning, etc. of the surface to be repaired.

Curing of the spray-on or roll-on polymer based wear-resistant coating is carried out as required based on the type of polymer based material used. The curing may be done by simply allowing for the required time to elapse, by thermosetting, by heating, by exposure to the atmosphere, etc. Alternatively, a multiple part polymer based composition, such as epoxy resin including a catalyst or hardener, may be used whereby curing commences upon combination of the multiple parts in a chemical curing reaction.

The spray-on or roll-on coatings differ from paint applications in that, for example, paint is typically used for anti-corrosion and does not typically have a toughness, hardness and/or composition suitable for significantly resisting wear associated with the mixing and/or cutting observed in a vertical mixer. Additionally, a coating of paint is much thinner than a coating of polymer based wear-resistant material. Typically, a suitable coating of paint has a thickness of about 80-150 µm and seldom exceeds 250 µm. A polymer based wear-resistant coating for lining a vertical mixer may optionally have a thickness of least about 600 µm or optionally a thickness 1000 µm (http://www.livingsteel.org/corrosion-4, from the International Iron and Steel Institute of Rue Colonel Bourg 120, B-1140 Brussels, Belgium).

For the purposes of this specification, roll-on also includes any form of applying a liquid or semi-liquid polymer based wear-resistant material other than spray-on application.

### Polymer based wear-resistant cover

The polymer based wear-resistant material may also be in the form of a non-roll-on or a non-spray-on material. For the purposes of distinguishing between a coating and a cover, a roll-on material and a spray-on material are referred to as coatings and a formed or pre-formed material that does not require curing of the material post application will be referred to as a cover.

Fig. 1c illustrates a vertical mixer 20, for example as shown in Fig. 1, having a polymer based wear-resistant cover 40 fastened to at least a portion of an inner surface 30 of a wall 26. As outlined above with reference to Fig. 1 a, the wall 26 is connected to the floor 22 generally by welding and a welding bead 31 typically protrudes into the mixing chamber as illustrated in Fig. 1 c. The polymer based wear-resistant cover 40 is fastened to the wall 26 using fasteners 72. To further increase the wear-resistant characteristics of the cover 40, a fastener 72 may be used near the bottom edge of the cover 40 substantially adjacent the welding bead 31 preventing bulk material from being wedged up and underneath the lower edge of the cover 40 during mixing of the bulk material.

Reference is made to Figs. 2, 2a, and 2b to describe another illustrative embodiment of a vertical mixer assembly 20. The vertical mixer assembly 20 is for mixing one or more bulk materials (not shown), for example feed materials, and includes a floor 22 with one or more upper surfaces thereof 24 and one or more walls 26 extending away from the floor 22 to a top edge 28. The wall 26 includes one or more inner surfaces 30 thereof. As can be seen in Figs. 1 and 2, the upper surface 24 and the inner surface 30 at least partially define a mixing chamber 32 which is open at the top edge 28, for receiving bulk material in the mixing chamber 32. The vertical mixer assembly 20 also includes a vertical auger 36 at least partially positioned above the floor 22 for mixing the bulk material. The auger 36 has an exterior surface 38 which is configured for engagement with the bulk material and for mixing and/or cutting of the bulk material upon operation of the auger 36. The vertical mixer assembly 20 of the present embodiment also includes a polymer based wear-resistant cover 40 (Figs. 2a, 2b) which is adapted for engagement with the bulk material, as will be described. The polymer based wear-resistant cover 40 may be fastened on one or more of the auger 36, the floor 22, and the wall 26 to at least part of the exterior surface 38, the upper surface 24, and the inner surface 30, respectively. The polymer based wear-resistant cover 40 includes a suitable polymer based material, as, for example, outlined above.

As shown in Figs. 2, 2a and 2b, in one embodiment, the upper surface 24 of the floor 22, the inner surface 30 of the wall 26, and the exterior surface 38 of the auger 36 may be provided with the polymer based wear-resistant cover 40. As illustrated in Fig. 2a, in this embodiment, the wall 26 and the floor 22 have fastened to them a polymer based wear-resistant cover 40. The cover 40 is fastened to at least a portion of the inner surface 30 of the wall 26 and a cover 40 is fastened to the upper surface 24 of the floor 22. In addition, and as illustrated in Fig. 2b, the auger 36 may include a polymer based wear-resistant cover 40 on the exterior surface 38 thereof.

In one embodiment illustrated in Figure 2, the vertical mixer assembly 20 includes one or more formed segments 70 (Fig. 2) of the polymer based wear-resistant cover 40. The formed segment 70 may be attached to one or more of the upper surface 24 of the floor 22, the interior surface 30 of the wall 26, and/or the exterior surface 38 of the auger 36 by one or more fasteners 72 (Fig. 2). For example, and as shown in Fig. 2, the formed segments 70 are attached to the interior surface 30 of the wall (Fig. 2a) by a number of fasteners 72. Suitable fasteners include but are not limited to screws, bolts, rivets, weldable steel plugs or straps, adhesive(s), etc.

It will be appreciated by those skilled in the art that one advantage of the vertical mixer assembly 20 disclosed in Figs. 1, 1 a, 1b, 2, 2a and 2b is that the coating 35 or covering 40 and segments 70 are relatively easy to replace. As can be seen in Fig. 2, each formed segment 70 may be relatively small, e.g., small enough that each can be handled by one or more people, e.g., when the segment is positioned in the vertical mixer assembly 20. For instance, if a worn formed segment 70 is to be replaced, the following steps may taken in replacing the segment 70: the fasteners are removed; the used formed segment is removed; the desired formed segment is put in place; and the fasteners are reinstalled and tightened, to hold the new formed segment in place. Accordingly, most users (i.e., farmers) would be able to replace the formed segments themselves, which results in significant cost savings. In addition, replacement of worn segments is effected with much less downtime for the vertical mixer assembly 20 than would have been required in the prior steel liners. This advantage also applies to the spray-on or roll-on coatings where worn patches in the coating may be repaired by simply respraying or rerolling a polymer based wear resistant compound on the worn patch and curing.

The formed segment 70 may be provided as a pre-formed segment, i.e., shaped to fit into a specific position. Alternatively, the formed segment 70 may be provided as a sheet of the polymer based material which is formable into any shape, as required. The sheet may be conveniently sized. For example, if the polymer based material (i.e., the formed segment 70) is a thermoplastic, then the sheet thereof may be heated sufficiently to be ductile. Once ductile, the segment 70 may be formed (i.e. bent) into the specific configuration required, by any suitable means.

By using the same technique, the pre-formed segment may be modified in order to make it fit better into a particular position, if the segment is made of material which becomes ductile when heated. For example, if the pre-formed segment does not fit as required into a predetermined position, it may be heated to make it ductile, and then adjustments to its shape are made as required.

Depending on the material used in the formed segments 70, the formed segment 70 may be repairable, possibly without removal of the worn formed segment 70. For instance, if the formed segment 70 may be made of a durable thermoplastic such as polyethylene, then the formed segment 70 may be repairable by, first, heating a worn portion of the segment until the polymer based material in and around such portion is at least somewhat malleable. Next, heated new polyethylene is then added at the worn portion (to replace the material worn away) and shaped, so that the segment is restored thereby to approximately its original dimensions and shape. Those skilled in the art would be aware of the range of temperatures to which the material should be heated. The temperature at which the formed segment 70 is malleable is typically well bellow the temperature required to remove a steel or stainless steel liner and therefore damage to the exterior paint on the mixer assembly is avoided.

As is known, the bulk material may be, for example feed such as hay, and various feed supplements or other additional materials added into the mixing chamber 32. Alternatively, the bulk material may be for composting or the like. Both before and after mixing, the bulk material typically includes a plurality of particles having a wide variety of shapes and sizes.

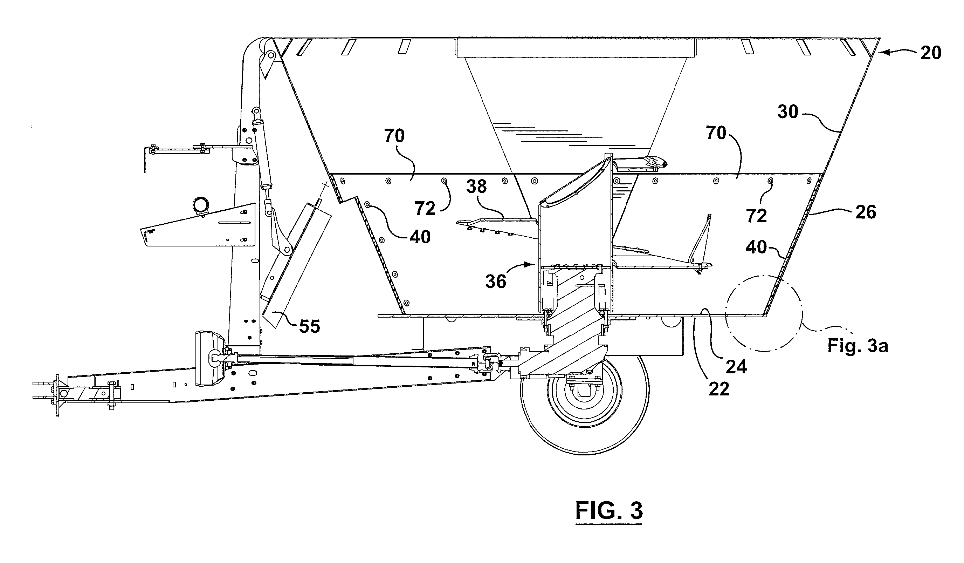

In operation, bulk material is added into the mixing chamber via the open top defined by the upper edge 28 of the wall 26 opening 52, as schematically represented for example by arrow "B" in Fig. 2. The auger 36 is rotated, to cut and mix the bulk material. Once the bulk material is mixed to the extent desired, the door 55 is moved to the open position (Fig. 3), and the bulk material exits the mixing chamber 32 via the opening provided by the open door 55.

After a load of bulk material has been cut and mixed, the polymer based wear-resistant covers 40 may be more easily cleaned than the conventional steel surfaces in prior vertical mixer assemblies. Typical bulk material sticks more easily to steel or stainless steel and therefore requires more effort to be removed therefrom. This results in substantially lower cross-contamination, i.e., contamination of a load by the previously mixed load.

Additional embodiments of the invention are shown in Figs. 2c, 2d, 3, 4, 4a, 5, and 5a.

As can be seen in Figs. 2c and 2d, in an alternative embodiment of a vertical mixer assembly 20, one or more polymer based wear-resistant cover(s) 40 is are attached by an adhesive 165 to one or more of the surfaces (i.e., the upper surface 24, the inner surface 30, and the exterior surface 38) of the floor 22, the wall 26, and/or the auger 36, respectively, for contact with the bulk material to be mixed. To further increase wear-resistance, adhesive may be applied near the lower edge of the cover 40 attached to the wall 26 near the welding bead 31. This prevents bulk material from being wedged up and underneath the cover 40 when mixing is taking place.

The adhesive 165 may be any suitable adhesive, as would be known to those skilled in the art. For example, contact cement is a suitable adhesive. The polymer based wear-resistant covers 40 may be in the form of formed segments 70. The advantage of using the adhesive 165 to attach the polymer based wear-resistant cover 40 is that it is somewhat easier to attach the formed segments 70 using adhesive than if, for instance, non-adhesive fasteners are used. Also, where adhesive is used, a seal is provided thereby between the polymer based wear-resistant cover 40 and the surface on which the adhesive is positioned, so that feed contamination and rust are minimized. However, the adhesive 165 should be sufficiently strong to hold the formed segments 70 in place when the vertical mixer assembly 20 is in use. Further, the formed segments 170 are repairable (as described above) or replaceable when they become worn. However, to replace a segment 70 which is attached by adhesive, the old (worn) segment 70 first needs to be removed, and the adhesive 165 which had held that segment in place also needs to be removed. This can be a time-consuming job, but removal can be done by most users.

In another alternative embodiment of the vertical mixer assembly 20 shown in Fig. 3 a vertical mixer assembly 20 includes one or more walls 26 and a floor 22. In this embodiment, the polymer based wear-resistant cover 40 is positioned only on an interior surface 30 of the wall 26. The upper surface 24 of the steel portion of the floor 22 is not covered with the polymer based cover. Also, in this embodiment, an exterior surface 38 of a vertical auger 36 is not covered with the polymer based cover 40. It will be understood that the polymer based portion 40 may be attachable and positionable on the interior surface 30 in any suitable manner, as described above, i.e., the polymer based wear-resistant cover 40 is attachable by fasteners including adhesive. As illustrated in Fig. 3, the polymer based portion 40 is included in formed segments 70 which are attached by fasteners 72.

Because it involves somewhat less polymer based material, the vertical mixer assembly 20 shown in Fig. 3 would cost somewhat less to build than the embodiments shown in Figs. 1 b, 2 and 2c. However, the assembly 20 illustrated in Fig. 3 has the disadvantage that the floor and the auger are not covered with the polymer based material 40.

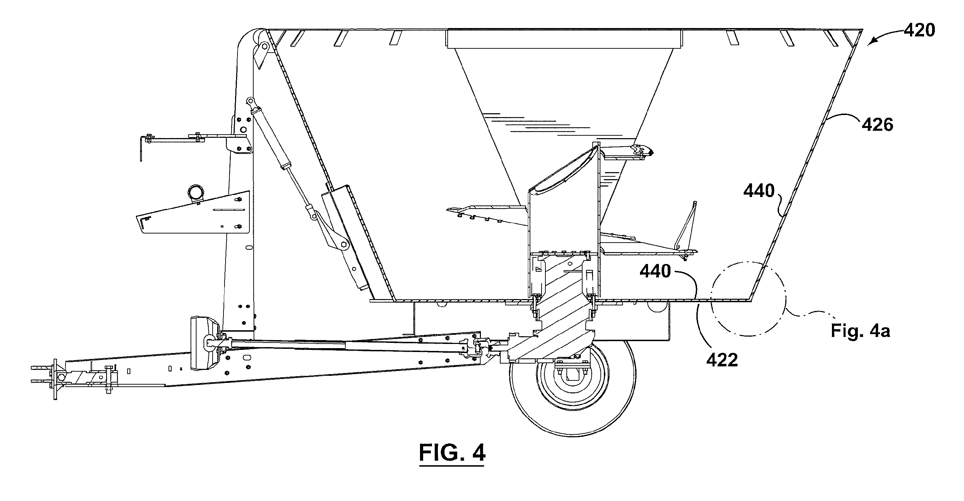

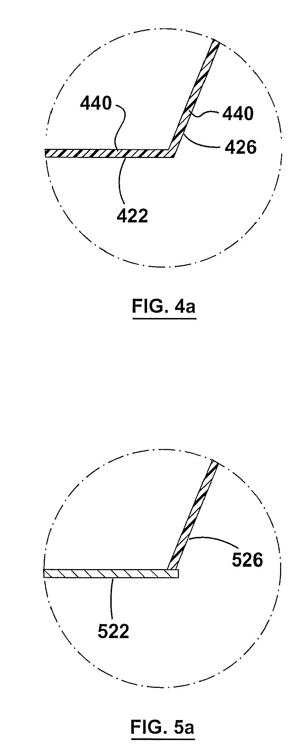

In another embodiment of a vertical mixer assembly 420 of the invention, as shown in Figs. 4 and 4a, the vertical mixer assembly 420 includes walls 426 and a floor 422 which substantially consist of a polymer based wear-resistant segment(s) 440. Any suitable polymer based wear-resistant material may be used in the polymer based segment(s) 440. For example, puck-board™ may be used or other equivalent or like polymers. A high density polyethylene extruded plastic may be used to form the floor 422 and the walls 426. Polyethylene and high density polyethylene has been found to be a suitable polymer based wear-resistant material, however, those skilled in the art would be aware of various suitable polymer based wear-resistant materials. Such a structure may result in a lower total weight for the assembly 420. Also, significant cost savings may result from this construction, as compared to a structure including steel.

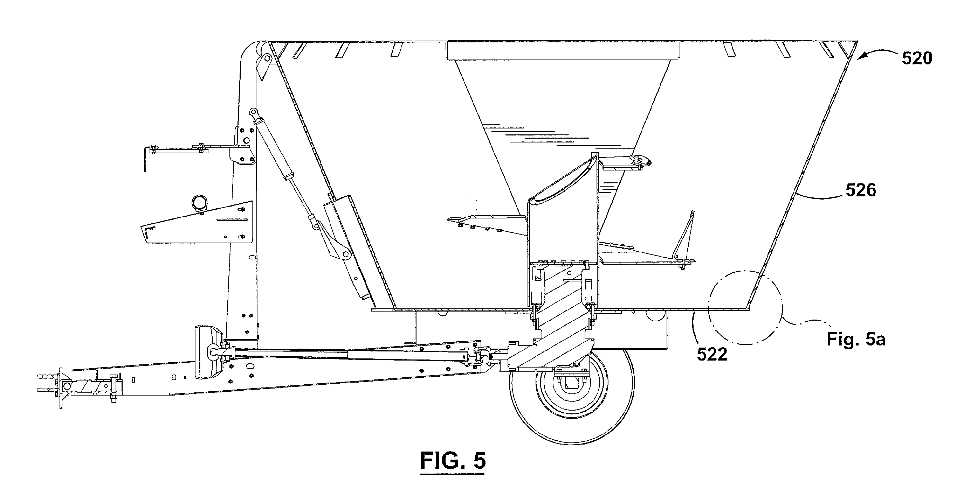

In yet another embodiment, as shown for example in Figs. 5 and 5a, a vertical mixer assembly 520 includes walls 526 which are constructed of one or more suitable polymer based wear-resistant segment(s) 540. The assembly 520 also includes a floor 522 which may be constructed of a steel or stainless steel portion 522, as is known. The entire tub or mixing chamber may be molded in one piece of polymer based wear-resistant material. Such a structure can result in a lower weight for the assembly 520. The structure will not corrode as it is made of polymer based material and also results in much lower cross contamination as the mixed and cut bulk material sticks much less to the polymer based material than to the steel or stainless steel equivalent.

In yet another embodiment, the polymer based wear-resistant cover 40 of the embodiment illustrated in Figure 2 for example, may extend beyond the top edge 28 of the vertical mixer assembly 20 to thereby increase the volume of the vertical mixer assembly 20. The extension may be attached using the methods and devices outlined above. In this particular embodiment, it is not essential that the polymer based wear-resistant cover 40 extend to the floor of the vertical mixer assembly 20 but merely that there is sufficient overlap at the bottom of the polymer based wear-resistant cover 40 to allow for attachment of the cover 40 to the vertical mixer assembly 20. The cover 40 may attach to the interior or exterior side of the vertical mixer assembly 20.

It should noted that for the purposes of this specification, the term vertical auger simply refers to a vertical auger setup as distinguished from a horizontal auger setup and does limit the invention to an auger positioned precisely vertical.

The present invention has been described with regard to a plurality of illustrative embodiments. However, it will be apparent to persons skilled in the art that a number of variations and modifications can be made without departing from the scope of the invention as defined in the claims.

## Claims

1. A vertical mixer assembly (20; 420; 520) for mixing a bulk material, comprising:
a floor (22; 422; 522) having an upper surface;
at least one wall (26; 426; 526) extending from the floor (22; 422; 522) and having an interior surface and an upper edge (28; 28; 528);
the floor (22; 422; 522) and the at least one wall (26; 426; 526) defining an open topped mixing chamber (32; 432; 532) having a general tub-shape suitable for receiving the bulk material;
the mixing chamber (32; 432; 532) comprising an outlet for egress of mixed bulk material;
at least one vertical auger (36; 436; 536) positioned in the mixing chamber (32; 432; 532) for mixing the bulk material, the at least one auger (36; 436; 536) having an exterior surface suitable for mixing the bulk material upon operation of the at least one auger (36; 436; 536); **characterised by**
a polymer based wear-resistant material (40; 440; 540) coating or covering at least a portion of the mixing chamber (32; 432; 532), wherein a thickness of the polymer based wear-resistant material (40; 440; 540) is more than 600 µm.

2. The vertical mixer assembly (20; 420; 520) of claim 1, wherein the coating or covering of the polymer based wear-resistant material (40; 440; 540) has a minimum thickness of 1000 µm.

3. The vertical mixer assembly (20; 420; 520) of claim 1 or 2, wherein the polymer based wear-resistant material (40; 440; 540) coats or covers at least a portion of the interior surface of the at least one wall from the floor(22;422;522) to a level lower than the top edge.

4. The vertical mixer assembly (20; 420; 520) of any of the preceding claims, wherein the polymer based wear-resistant material (40; 440; 540) coats or covers at least a portion of a surface selected from the group consisting of: a surface on the interior of the mixing chamber (32; 432; 532), the upper surface, the interior surface and the exterior surface.

5. The vertical mixer assembly (20; 420; 520) of claim any of the preceding claims, wherein the polymer based wear-resistant material (40; 440; 540) comprises a metallic component.

6. The vertical mixer assembly (20; 420; 520) of any of the preceding claims, wherein the polymer based wear-resistant material (40; 440; 540) comprises one or more polymers selected from the group consisting of: polyethylene (PE), high density polyethylene (HDPE), polyurethane, polyurea, polymethyl methacrylate (PMMA), polyamides, nylon polymers, epoxy polymers and polytetrafluoroethylene (PTFE).

7. The vertical mixer assembly (20; 420; 520) of any of the preceding claims, wherein the polymer based wear-resistant material (40; 440; 540) is a coating selected from the group consisting of: a liquid or semi-liquid spray-on polymer based material (40; 440; 540) and a liquid or semi-liquid roll-on polymer based material (40; 440; 540).

8. The vertical mixer assembly (20; 420; 520) of any of the preceding claims, wherein the polymer based wear-resistant material (40; 440; 540) is a covering selected from the group consisting of: an extruded polymer, a moulding, a pre-fabricated polymer, a fabricated polymer.

9. The vertical mixer assembly (20; 420; 520) of claim according to any of the preceding claims, wherein the polymer based wear-resistant material (40; 440; 540) is a spray-on polymer based material (40; 440; 540).

10. The vertical mixer assembly (20; 420; 520) of claim 9, wherein the spray-on polymer based material (40; 440; 540) comprises polyurethane and optionally polyurea.

11. The vertical mixer assembly (20; 420; 520) of claims 1-8, wherein the polymer based wear-resistant material (40; 440; 540) is a covering fastened to the mixing chamber (32; 432; 532) using a fastener.

12. The vertical mixer assembly (20; 420; 520) of claim 11, wherein the fastener is selected from the group consisting of a bolt, a screw, weldable steel plugs or straps, a rivet and adhesive.

13. The vertical mixer assembly (20; 420; 520) of claims 1 to 8, 11 and 12, wherein the polymer based wear-resistant material (40; 440; 540) is a covering and covers at least a portion of the interior surface adjacent the floor (22;422;522) and is fastened to the wall at least near the floor (22;422;522) to prevent mixed bulk material from being wedged between the covering and the interior surface.

14. A method of increasing wear-resistance in a vertical mixer assembly (20; 420; 520) for mixing bulk material, said method comprising the steps of:
providing a vertical mixer assembly (20; 420; 520) having a mixing chamber (32; 432; 532) for receiving bulk material and at least one vertical auger (36; 436; 536) in the mixing chamber (32; 432; 532) having an exterior surface suitable for mixing the bulk material; and
applying a polymer based wear-resistant covering to at least a portion of an inner surface of the mixing chamber (32; 432; 532) or an exterior surface of the vertical auger (36; 436; 536).

15. The method of claim 14, wherein the based wear-resistant covering is applied by spraying on at least a portion of an inner surface of the mixing chamber (32; 432; 532) or the exterior surface of the at least one vertical auger (36; 436; 536).
